# FASCICULE DE BREVET EUROPEEN

(11) **EP 1 263 681 B1**
(45) Date de publication et mention de la délivrance du brevet: **31.08.2005**
(21) Numéro de dépôt: 01913958.3
(22) Date de dépôt: 07.03.2001
(51) Int. Cl.: C01B 31/18, B01J 23/26, B01J 8/02, B01J 4/04, B01J 19/24

(54) **PROCEDE DE PRODUCTION DE MONOXDE DE CARBONE PAR RETROCONVERSION INVERSE AVEC UN CATALYSEUR ADAPTE**
VERFAHREN ZUR HERSTELLUNG VON KOHLENMONOXID MIT EINEM GEEIGNETEM KATALYSATOR MITTELS UMGEKEHRTER KONVERTIERUNG
METHOD FOR PRODUCING CARBON MONOXIDE BY REVERSE CONVERSION WITH AN ADAPTED CATALYST

(30) Priorité: 07.03.2000 FR 0002927
(43) Date de publication de la demande: 11.12.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: DUPONT, René, F-59500 Douai (FR); GAUTHIER, Pierre, F-94260 Fresnes (FR); MARTY, Pascal, F-75002 Paris (FR)
(74) Mandataire: Mercey, Fiona Susan
(86) Numéro de dépôt international: PCT/FR2001/000689
(87) Numéro de publication internationale: WO 2001/066463

(56) Documents cités:
- EP-A- 0 601 956
- FR-A- 2 593 164
- US-A- 3 718 418
- US-A- 5 911 964
- DATABASE WPI Section Ch, Week 197901 Derwent Publications Ltd., London, GB; Class E36, AN 1979-00583B XP002153803 & JP 53 119798 A (MITSUI TOATSU CHEM INC), 19 octobre 1978 (1978-10-19)
- PATENT ABSTRACTS OF JAPAN vol. 1995, no. 08, 29 septembre 1995 (1995-09-29) & JP 07 136462 A (TOSHIBA CORP), 30 mai 1995 (1995-05-30)
- DATABASE WPI Section Ch, Week 199444 Derwent Publications Ltd., London, GB; Class E36, AN 1994-354411 XP002153804 & JP 06 279012 A (TOSOH CORP), 4 octobre 1994 (1994-10-04)
- DATABASE WPI Section Ch, Week 199318 Derwent Publications Ltd., London, GB; Class E36, AN 1993-148964 XP002153805 & JP 05 085713 A (AGENCY OF IND SCI & TECHNOLOGY), 6 avril 1993 (1993-04-06)
- PATENT ABSTRACTS OF JAPAN vol. 1997, no. 01, 31 janvier 1997 (1997-01-31) & JP 08 245211 A (TOSOH CORP;KOKUSAI KANKYO GIJUTSU ITEN KENKYU CENTER), 24 septembre 1996 (1996-09-24)

## Description

L'invention concerne un procédé pour la production de monoxyde de carbone par rétroconversion inverse en phase gazeuse, d'hydrogène et d'anhydride carbonique.

La réaction de l'hydrogène avec l'anhydride carbonique conduit, dans des conditions opératoires appropriées, à un mélange d'eau et de monoxyde de carbone. Cette réaction conduit à un équilibre entre les différents constituants et des catalyseurs métalliques sont généralement utilisés pour approcher cet équilibre dans des temps compatibles avec une taille acceptable des réacteurs. De façon à déplacer l'équilibre vers la formation de monoxyde de carbone, il est connu d'opérer en présence de catalyseurs métalliques.

Ainsi, EP 737 647 et EP 742 172 proposent l'utilisation de catalyseurs à base d'oxyde de cuivre-zinc ou de catalyseurs à base de fer-chrome. Ces catalyseurs ne sont pas optimums dans la mesure où leur durée de vie est très limitée dans les conditions opératoires facilitant la rétroconversion inverse de l'hydrogène avec l'anhydride carbonique, conditions qui impliquent notamment des températures élevées et une faible pression partielle d'eau.

EP 737 647 et EP 742 172 illustrent plus particulièrement la mise en oeuvre d'un procédé pour la production de monoxyde de carbone comprenant les étapes consistant à :
a - produire un mélange gazeux de CO, de CO₂ et d'hydrogène par reformage catalytique à la vapeur de méthane gazeux ;
b - traiter le mélange gazeux, après élimination de l'eau à température ambiante, dans un réacteur contenant à la fois (i) un catalyseur permettant la conversion du CO₂ en CO par réaction de celui-ci avec l'hydrogène, et (ii) un adsorbant permettant l'élimination in situ de l'eau formée.

Plus précisément, l'élimination de l'eau est réalisée par adsorption sur un adsorbant qui peut être de la silice, de l'alumine ou une zéolithe.

La mise en oeuvre d'un tel adsorbant pour le piégeage de l'eau nécessite un fonctionnement cyclique du réacteur avec phases d'adsorption, dépressurisation, régénération et repressurisation.

Afin d'obtenir une production continue, au moins deux réacteurs sont nécessaires, et des moyens de recyclage sont nécessaires pour améliorer l'efficacité du procédé.

L'invention se propose de résoudre l'ensemble des inconvénients de l'état de la technique en fournissant un procédé utilisant un catalyseur adapté à la production de monoxyde de carbone à haute température et sous faible pression partielle d'eau, et dans lequel l'élimination de l'eau ne fait pas intervenir de processus cyclique d'adsorption et de régénération.

L'invention a trait de façon générale à un procédé pour la production de monoxyde de carbone par rétroconversion inverse en phase gazeuse de CO₂ et d'H₂, caractérisé en ce que la réaction est réalisée en présence d'un catalyseur à base d'oxyde de zinc et d'oxyde de chrome, ne contenant pas de fer.

La présence simultanée d'oxyde de zinc (ZnO) et d'oxyde de chrome (Cr₂O₃) dans le catalyseur est essentielle selon l'invention pour obtenir une bonne vitesse réactionnelle de la conversion du CO₂ en CO.

La présence de fer dans le catalyseur doit être évitée, cet élément métallique favorisant les réactions secondaires de production de méthane et de méthanol.

On préfère par ailleurs que le catalyseur ne comprenne qu'une moindre quantité de nickel. Ainsi, le catalyseur ne comprendra généralement pas plus de 2,5% en poids, de préférence pas plus de 1,5% en poids, mieux encore pas plus de 0,5% en poids de nickel.

De préférence, le catalyseur de l'invention ne comprend que des traces de nickel et mieux encore pas de nickel du tout. En effet, la présence de nickel favorise la réaction secondaire de méthanation avec formation non souhaitée de méthane.

Selon un mode de réalisation de l'invention, le rapport pondéral de l'oxyde de zinc à l'oxyde de chrome est compris entre 1,5 et 4,5, avantageusement entre 1,5 et 2,5, par exemple entre 1,7 et 2,2.

A titre d'exemple, le catalyseur utilisable selon l'invention comprend de 50 à 90% en poids d'oxyde de zinc, de préférence de 55 à 85%, mieux encore de 60 à 68% en poids, et de 15 à 45% en poids, de préférence de 20 à 40%, mieux encore de 30 à 36% en poids d'oxyde de chrome, les pourcentages en poids étant calculés par rapport à la quantité totale de substances actives présentes dans le catalyseur.

Les substances actives du catalyseur sont les oxydes métalliques et plus généralement les composés métalliques présents dans le catalyseur.

Des catalyseurs répondant à ces caractéristiques sont facilement préparés par l'homme du métier par mise en oeuvre de méthodes conventionnelles.

Selon l'invention, le catalyseur peut être utilisé tel quel ou imprégné sur un support inerte. De façon avantageuse, le catalyseur est utilisé tel quel, sous la forme de granules ou de pastilles dont le diamètre équivalent varie généralement entre 1 et 20 mm, de préférence entre 5 et 10 mm.

Le diamètre équivalent est le diamètre de la sphère de même surface que la pastille ou le granule de catalyseur.

La réaction de l'hydrogène avec l'anhydride carbonique est généralement mise en oeuvre par mise en contact d'un mélange gazeux contenant lesdits réactifs avec le catalyseur à une température de 300 à 520° C, de préférence de 300 à 500° C, mieux encore de 300 à 450° C. On notera que plus la température réactionnelle est élevée, plus le degré de conversion de l'anhydride carbonique en monoxyde de carbone est élevé. Une température trop élevée n'est cependant pas souhaitable dans la mesure où elle risque de favoriser les réactions secondaires et entraîner la dégradation du catalyseur.

Le mélange gazeux traité selon le procédé de l'invention est un mélange gazeux riche en dioxyde de carbone et en hydrogène. La présence d'autres gaz dans ce mélange n'est pas exclue dès lors que ceux-ci n'interfèrent pas, ou très faiblement, avec la réaction. Ainsi, le mélange gazeux initial peut contenir de la vapeur d'eau ou du méthane.

Par "riche en dioxyde de carbone et en hydrogène", on entend selon l'invention un mélange gazeux dans lequel l'hydrogène et l'anhydride carbonique constituent une fraction du mélange gazeux d'au moins 50% en volume, de préférence d'au moins 70% en volume, mieux encore d'au moins 90% en volume.

Selon un mode de réalisation particulièrement préféré de l'invention, le mélange gazeux est essentiellement constitué d'anhydride carbonique gazeux et d'hydrogène gazeux.

De façon avantageuse, le procédé de l'invention est mis en oeuvre sur le site d'une unité de production rejetant de l'anhydride carbonique en tant que gaz résiduaire et, par exemple, sur le site d'une unité de production d'ammoniac. L'hydrogène gazeux est acheminé jusqu'au site par pipeline.

Selon un autre mode de réalisation de l'invention, le mélange gazeux provient d'une unité de reformage d'hydrocarbures avec réformage à la vapeur ou à l'oxygène.

Le rapport molaire de l'hydrogène au CO₂ peut varier dans de larges proportions entre 0,01 et 100. Le procédé de l'invention conduit à de bons résultats pour un rapport molaire compris entre 0,5 et 15 et est particulièrement bien adapté pour des rapports compris entre 1 et 5.

Un rapport molaire H₂/CO₂ plus élevé conduit à un meilleur taux de conversion du CO₂ en CO mais augmente la taille de l'unité aval nécessaire à la séparation et au recyclage de l'H₂ en excès.

Le procédé de l'invention est préférablement mis en oeuvre de façon continue en faisant passer le mélange gazeux à travers au moins un lit catalytique suivi d'une récupération associée de l'eau formée par condensation.

Selon l'invention, la pression opératoire est comprise entre 10 et 40 bars, de préférence entre 15 et 25 bars, par exemple environ 20 bars.

En pratique, la pression opératoire sera déterminée et optimisée en fonction des dispositifs et unités de traitement situés en aval du lit catalytique en vue du traitement et de la purification du mélange gazeux sortant du lit catalytique.

L'homme du métier adaptera par ailleurs la quantité de catalyseur nécessaire au débit du mélange gazeux entrant dans le lit catalytique.

A titre d'exemple, la vitesse volumétrique horaire du mélange gazeux entrant pourra être fixée entre 3000 et 9000 Nm³/h par m³ de catalyseur, de préférence entre 4000 et 7000 Nm³/h, mieux encore entre 4000 et 6000 Nm³/h.

Dans le cadre de l'invention, 1Nm³ représente le volume d'un mètre cube dans les conditions normales de température et de pression.

Le mélange gazeux sortant du lit catalytique contient de la vapeur d'eau, du monoxyde de carbone et, la réaction de H₂ avec CO₂ étant une réaction d'équilibre, de l'anhydride carbonique et de l'hydrogène n'ayant pas réagi.

Les meilleurs rendements de conversion sont obtenus lorsque la vapeur d'eau formée est éliminée du milieu réactionnel au fur et à mesure de sa formation.

En effet, l'élimination de l'eau permet le déplacement de l'équilibre de conversion vers la formation de CO :

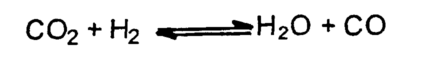

Lorsque l'élimination de l'eau in situ nécessite un fonctionnement cyclique des équipements, on préfère procéder par étapes en éliminant l'eau du flux gazeux une fois celui-ci sorti du lit catalytique.

Après élimination de l'eau formée, le flux gazeux peut être enrichi en monoxyde de carbone par chauffage à une température de 300 - 520° C et nouvelle mise en contact avec le catalyseur.

De fait, si, après élimination de l'eau qu'il contient, le mélange gazeux est à nouveau mis en présence du catalyseur à une température réactionnelle appropriée, on provoque la conversion d'une partie supplémentaire de l'anhydride carbonique en monoxyde de carbone, par évolution de la réaction jusqu'à un nouvel état d'équilibre.

Ainsi, on distingue deux modes de réalisation préférés du procédé de l'invention.

Le premier (variante A) comprend la mise en oeuvre, en continu, des étapes consistant à préparer un mélange gazeux riche en hydrogène et en dioxyde de carbone présentant une température comprise entre 300 et 520° C, puis faire réagir ledit mélange gazeux, avec formation de monoxyde de carbone et d'eau, par passage à travers un lit catalytique garni d'un catalyseur à base d'oxyde de zinc et d'oxyde de chrome, tout en procédant à la séparation de la vapeur d'eau du milieu réactionnel au fur et à mesure de sa formation, de façon à récupérer en sortie dudit lit catalytique un flux gazeux riche en monoxyde de carbone.

Le second (variante B) comprend la mise en oeuvre, en continu, des étapes consistant à :
a) - préparer un mélange gazeux riche en hydrogène et en dioxyde de carbone présentant une température comprise entre 300 et 520° C, puis
b) - faire réagir ledit mélange gazeux, avec formation de monoxyde de carbone et de vapeur d'eau, par passage dudit mélange gazeux à travers un lit catalytique garni d'un catalyseur à base d'oxyde de zinc et d'oxyde de chrome et maintenu sous une pression de 10 à 40 bars ;
c) - refroidir le flux gazeux sortant dudit lit catalytique de façon à condenser tout ou partie de la vapeur d'eau formée ;
d) - séparer l'eau condensée dudit flux gazeux ; et
e) - le cas échéant, retraiter au moins une fois le flux gazeux résultant, préalablement porté à une température de 300 à 520° C, par mise en oeuvre des étapes b) à d) précédentes, de façon à augmenter la proportion de monoxyde de carbone dans le flux gazeux, chaque étape b) étant préférablement réalisée dans un lit catalytique distinct.

A l'étape c), il est souhaitable de condenser la majeure partie de l'eau formée, de préférence au moins 80% de l'eau formée, par exemple au moins 90%.

De façon générale, le flux gazeux est refroidi à cette étape jusqu'à température ambiante.

En variante, on peut envisager, à l'étape c), d'augmenter la proportion d'eau condensée en abaissant la température avec un groupe frigorifique.

A l'étape (a), on peut procéder soit par mélange d'un flux gazeux riche en hydrogène et d'un flux gazeux riche en dioxyde de carbone, chaque flux gazeux étant chauffé séparément de façon à présenter une température appropriée, soit par chauffage d'un mélange gazeux riche en hydrogène et en dioxyde de carbone.

De façon avantageuse, le chauffage des flux et mélanges gazeux à 300-520° C, à l'étape a), et éventuellement le chauffage du flux gazeux à 300-520° C, à l'étape e), est réalisé en récupérant la chaleur cédée lors d'une étape ultérieure de refroidissement et grâce à un moyen de chauffage externe.

Par exemple, la chaleur est récupérée lors de la mise en oeuvre de l'étape c) ou d'une étape ultérieure de type c).

Ainsi, selon un mode de réalisation particulièrement préféré de l'invention, le procédé comprend les étapes consistant à :
a) préparer un mélange gazeux riche en hydrogène et en dioxyde de carbone présentant une température comprise entre 300 et 520° C, ladite température étant atteinte par récupération de la chaleur cédée lors d'une étape ultérieure et par échange thermique avec une source extérieure de chaleur ;
b) faire réagir ledit mélange gazeux, avec formation de monoxyde de carbone et de vapeur d'eau, par passage dudit mélange gazeux à travers un lit catalytique garni d'un catalyseur à base d'oxyde de zinc et d'oxyde de chrome et maintenu sous une pression de 10 à 40 bars ;
c) refroidir le flux gazeux sortant dudit lit catalytique jusqu'à température ambiante par cession de chaleur avec l'étape a) et par échange thermique avec une source froide extérieure, de façon à condenser tout ou partie de la vapeur d'eau formée ;
d) séparer l'eau condensée dudit flux gazeux ; et
e) le cas échéant, retraiter au moins une fois le flux gazeux résultant, préalablement porté à une température de 300 à 520° C, par mise en oeuvre des étapes b) à d) précédentes, de façon à augmenter la proportion de monoxyde de carbone dans le flux gazeux sortant, chaque étape b) étant préférablement réalisée dans un lit catalytique distinct.

L'étape e) est optionnelle. Elle consiste à retraiter une ou plusieurs fois, et de préférence 1 à 4 fois, le flux gazeux sortant, par mise en oeuvre répétée d'une étape de chauffage à une température de 300 à 520° C suivie des étapes b) à d).

Selon un mode de réalisation avantageux, le préchauffage à la température de 300 à 520° C est réalisée par récupération de la chaleur cédée lors de l'étape ultérieure de refroidissement c) et par échange thermique avec une source extérieure de chaleur.

A chaque étape de retraitement supplémentaire (mise en oeuvre de façon successive d'une étape de chauffage à une température de 300 à 520° C, puis des étapes b) à d)), on augmente le taux de conversion du CO₂ et on réduit le débit du flux gazeux à traiter pour une même production de CO. Le taux de conversion souhaité dépend de l'utilisation prévue du mélange gazeux obtenu en fin de procédé.

Pour une mise en oeuvre en continu du procédé de l'invention, chaque nouvelle étape b) dans le second mode de réalisation (variante B) est préférablement mise en oeuvre dans un lit catalytique distinct du précédent et donc situé en aval dans la ligne de traitement.

Selon un mode de réalisation particulièrement préféré de l'invention, le procédé de l'invention est mis en oeuvre en continu par passage du mélange gazeux à travers au moins deux lits catalytiques en série et récupération de l'eau générée par simple condensation à température ambiante.

En fonction de l'utilisation ultérieure envisagée, l'homme du métier réalisera le meilleur compromis entre le taux de conversion, le nombre d'équipements à mettre en oeuvre et leur taille, le coût global de fonctionnement et fixera en conséquence le nombre optimal d'étapes de retraitement.

Deux types de fonctionnement sont envisagés pour le réacteur catalytique :
a) un premier type de fonctionnement, adiabatique, consiste à chauffer le mélange gazeux à faire réagir avant son introduction dans le lit catalytique. La réaction du dioxyde de carbone avec l'hydrogène étant endothermique, la température du flux gazeux sortant du lit catalytique est inférieure à celle du mélange gazeux entrant ;
b) un deuxième type de fonctionnement, non adiabatique, consiste à apporter au mélange gazeux la chaleur nécessaire à sa mise en température et pour compenser la chaleur consommée lors de la réaction endothermique, lors de son passage au travers du lit catalytique, par chauffage dudit lit catalytique au moyen d'une source de chaleur externe. Dans ce cas, la température du flux gazeux sortant dudit lit catalytique est plus élevée que précédemment et le taux de conversion du dioxyde de carbone est plus important.

Quelle que soit la façon de procéder, le mélange gazeux produit comprend en plus du monoxyde de carbone, de l'hydrogène et de l'anhydride carbonique n'ayant pas réagi, ainsi que la vapeur d'eau formée.

Selon un mode de réalisation particulièrement avantageux, le procédé de l'invention comprend une étape ultérieure de traitement du flux gazeux récupéré en fin de procédé consistant à isoler le monoxyde de carbone produit ou à isoler un mélange de monoxyde de carbone et d'hydrogène, ainsi que des étapes pour le recyclage du CO₂ et de l'excédent d'hydrogène.

L'invention va être maintenant décrite en se référant aux dessins et aux exemples ci-après.

Les dessins illustrent des modes de réalisation particuliers du procédé de l'invention. Il doit être entendu que l'invention n'entend pas se limiter à ces modes de réalisation. L'homme du métier pourra notamment envisager la combinaison des techniques de traitement et de recyclage illustrées dans deux ou plusieurs de ces modes de réalisation.
La Figure 1 représente schématiquement une installation monoétagée pour la mise en oeuvre du procédé de l'invention tel que décrit ci-dessus dans lequel le lit catalytique fonctionne de façon non adiabatique.
La Figure 2 représente schématiquement une installation biétagée pour la mise en oeuvre du procédé de l'invention incluant le chauffage intermédiaire du flux gazeux sortant d'un premier lit catalytique et le passage de celui-ci dans un second lit catalytique, avant élimination de l'eau. Dans ce mode de réalisation, les lits catalytiques fonctionnent de façon adiabatique.
La Figure 3 représente schématiquement une installation triétagée pour la mise en oeuvre du procédé de l'invention tel que décrit ci-dessus dans lequel l'étape e) comprend deux étapes de retraitement. Dans cette installation, chaque lit catalytique fonctionne de façon adiabatique.
La Figure 4 représente une vue en coupe d'un réacteur pour la mise en oeuvre du procédé de l'invention, dans lequel l'eau est séparée du milieu réactionnel au fur et à mesure de sa formation.
Les Figures 5 à 13 représentent des diagrammes fonctionnels illustrant des modes de réalisation préférés de l'invention pour le procédé de séparation du monoxyde de carbone ou de mélanges de monoxyde de carbone et d'hydrogène.

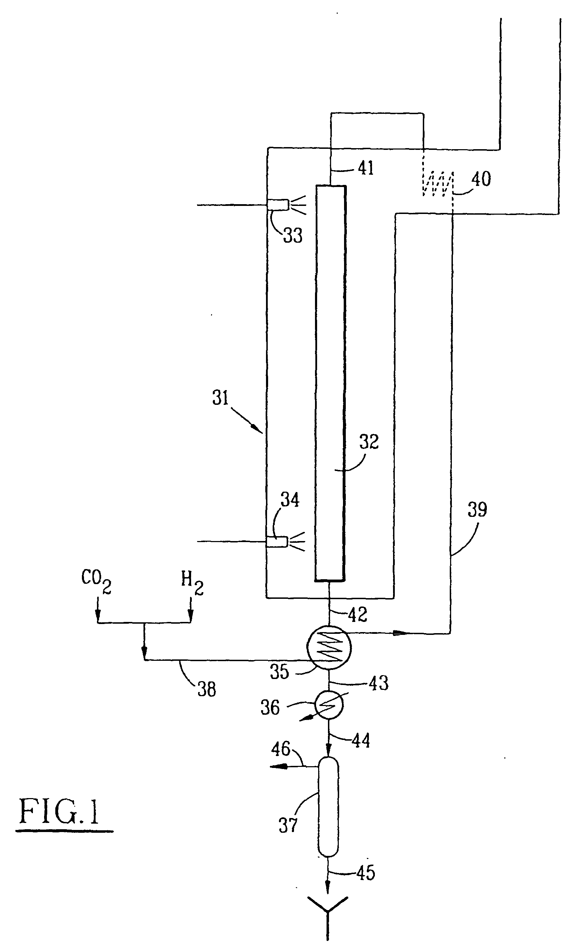

L'installation de la figure 1 comprend un four 31 dans lequel est disposé un échangeur de chaleur contenant un ou plusieurs lits catalytiques 32, recevant de la chaleur par voie convective ou radiante de la combustion effectuée dans un ou plusieurs brûleurs 33 et 34, un échangeur de chaleur 35, un refroidisseur condenseur 36, un séparateur 37 et un récupérateur de chaleur dans les gaz de combustion 40.

En cours de fonctionnement, le mélange gazeux comprenant l'anhydride carbonique et l'hydrogène est amené jusqu'à l'échangeur de chaleur 35 via la conduite 38. Au sortir de l'échangeur de chaleur 35, le mélange gazeux est amené jusqu'à un récupérateur de chaleur 40 via la conduite 39 où il est chauffé à une température de 422° C. Le récupérateur 40 débouche dans une conduite 41 alimentant le lit catalytique 32. Le lit catalytique 32 est chauffé en continu par les brûleurs 33 et 34 et maintenu sous une pression de 25 bars. La température du mélange gazeux en sortie du lit catalytique 32 est de 475° C. Celui-ci est amené jusqu'à l'échangeur de chaleur 35 via la conduite 42, où il est refroidi, puis circule dans la conduite 43 jusqu'au refroidisseur condenseur 36, d'où il est conduit jusqu'au séparateur 37 par l'intermédiaire de la conduite 44. L'eau condensée est évacuée par la conduite 45 et le mélange gazeux est récupéré par la conduite 46.

Les compositions des mélanges gazeux en certains points de l'installation sont rapportées dans le tableau 1 ci-dessous, en pourcentages molaires.

**TABLEAU 1**

| Constituants du mélange | "38" | "42" | "46" |
|---|---|---|---|
| CO | | 13,38 | 15,39 |
| CO₂ | 33,33 | 19,95 | 22,95 |
| H₂ | 66,67 | 53,29 | 61,32 |
| H₂O | | 13,38 | 0,34 |

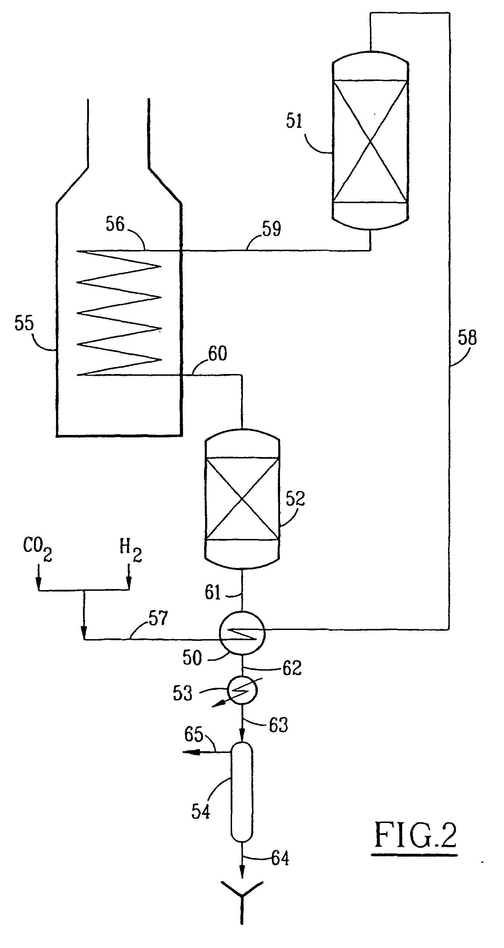

L'installation de la Figure 2 comprend deux réacteurs 51 et 52 garnis respectivement de lits catalytiques, un four de préchauffage 55, un échangeur de chaleur 50, un refroidisseur condenseur 53 et un séparateur 54.

Une conduite 57 amène le mélange gazeux jusqu'à l'échangeur de chaleur 50 où il est chauffé jusqu'à 422° C. On fait circuler ce mélange gazeux via la conduite 58 jusqu'au réacteur 51 et on le fait passer à travers le lit catalytique, non représenté, garnissant le réacteur 51 d'où il ressort à une température de 355° C. Pendant cette opération, le lit catalytique est maintenu sous une pression de 25 bars. La conduite 59 permet le transfert du mélange gazeux entre le réacteur 51 et le préchauffeur 56 disposé dans le four de préchauffage 55. Le préchauffeur débouche dans la conduite 60, laquelle est reliée au réacteur 52. Le réacteur 52 est maintenu sous une pression de 25 bars. La température du mélange gazeux circulant dans la conduite 60 est de 523° C. Après avoir traversé le lit catalytique du réacteur 52, le mélange gazeux, dont la température est descendue à 475° C, est amené, via la conduite 61, à l'échangeur de chaleur 50. Au sortir de l'échangeur de chaleur 50 où il est refroidi, le mélange gazeux est amené au refroidisseur 53 puis au séparateur 54, via les conduites 62 et 63. L'eau condensée est évacuée du séparateur 54 par la conduite 64 et le gaz résiduel est disponible à une température de 35°C dans la conduite 65.

La composition des mélanges gazeux en certains points de l'installation est reportée dans le tableau 2 ci-dessous, en pourcentages molaires :

**TABLEAU 2**

| Constituants du mélange | "57" | "59" | "61" | "65" |
|---|---|---|---|---|
| CO | | 8,64 | 13,38 | 15,39 |
| CO₂ | 33,33 | 24,69 | 19,95 | 22,95 |
| H₂ | 66,67 | 58,03 | 53,29 | 61,32 |
| H₂O | | 8,64 | 13,38 | 0,34 |

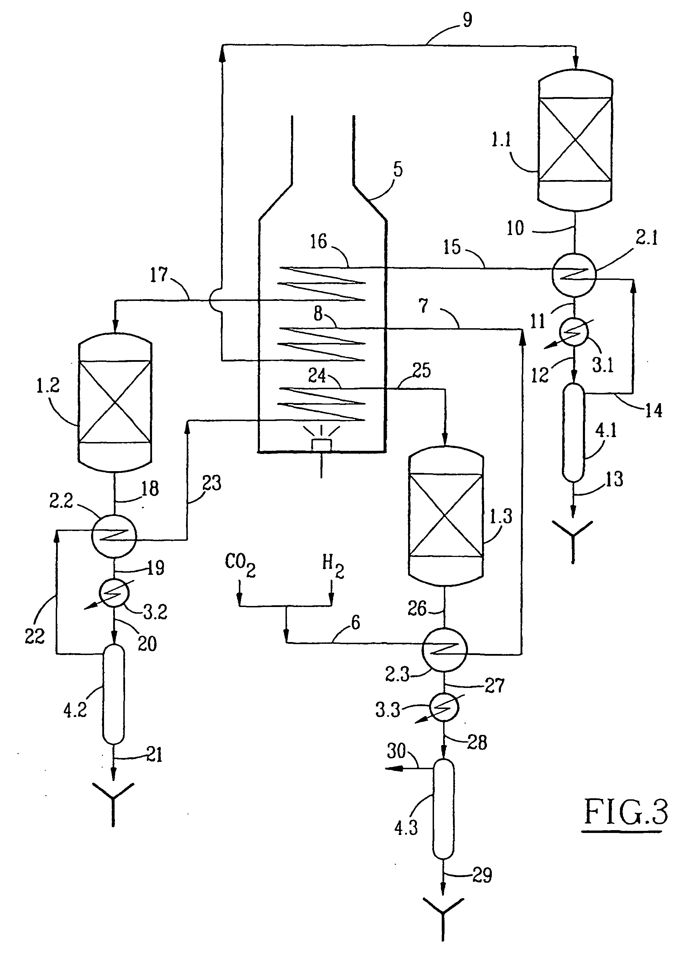

La figure 3 représente un mode préféré de réalisation de l'invention. Elle comprend essentiellement trois réacteurs adiabatiques 1.1, 1.2 et 1.3, trois échangeurs de chaleur 2.1, 2.2 et 2.3, trois refroidisseurs condenseurs 3.1, 3.2 et 3.3, trois séparateurs 4.1, 4.2 et 4.3 ainsi que trois préchauffeurs 8, 16 et 24 placés dans un four de préchauffage 5 muni de un ou plusieurs brûleurs.

Les réacteurs 1.1, 1.2 et 1.3 sont garnis d'un lit catalytique non représenté, constitué d'un catalyseur à base de ZnO et de Cr₂O₃ exempt de fer.

Chacun des réacteurs 1.1, 1.2 et 1.3 fonctionne sous une pression de 25 bars environ.

Le mélange gazeux de départ, composé d'hydrogène et de dioxyde de carbone alimente l'échangeur de chaleur 2.3 via la conduite 6 où il est préchauffé à 420° C, puis est envoyé dans le préchauffeur 8 disposé dans le four de préchauffage 5 via la conduite 7. Préchauffé à 515° C, il alimente ensuite le réacteur 1.1 via la conduite 9. Après passage sur le catalyseur du réacteur, le mélange en sortie est à une température de 435° C. Via la conduite 10, il entre et cède une partie de sa chaleur dans l'échangeur 2.1 puis, via la conduite 11, il entre et est refroidi dans le refroidisseur condenseur 3.1

Le mélange diphasique issu du refroidisseur condenseur 3.1 à 35° C environ est amené au séparateur 4.1 via la conduite 12. L'eau condensée est évacuée du séparateur 4.1 par la conduite 13 alors que la phase gazeuse est disponible pour une nouvelle étape de traitement dans la conduite 14.

Le mélange gazeux disponible en sortie du séparateur 4.1 composé d'H₂, de CO₂, de CO et d'H₂O, alimente l'échangeur de chaleur 2.1 via la conduite 14 où il est préchauffé à 390°C, puis est envoyé dans le préchauffeur 16 disposé dans le four de préchauffage 5 via la conduite 15. Préchauffé à 520°C, il alimente ensuite le réacteur 1.2 via la conduite 17. Après passage sur le catalyseur du réacteur, le mélange en sortie est à une température de 460°C. Via la conduite 18, il entre et cède une partie de sa chaleur dans l'échangeur de chaleur 2.2 puis, via la conduite 19, il entre et est refroidi dans le refroidisseur condenseur 3.2.

Le mélange diphasique issu du redroidisseur condenseur 3.2 à 35°C environ est amené au séparateur 4.2 via la conduite 20. L'eau condensée est évacuée du séparateur 4.2 par la conduite 21 alors que la phase gazeuse est disponible pour une nouvelle étape de traitement dans la conduite 22.

Le mélange gazeux disponible en sortie du séparateur 4.2 composé d'H₂, de CO₂, de CO et d'H₂O, alimente l'échangeur de chaleur 2.2 via la conduite 22 où il est préchauffé à 410° C, puis est envoyé dans le préchauffeur 24 disposé dans le four de préchauffage 5 via la conduite 23. Préchauffé à 510°C, il alimente ensuite le réacteur 1.3 via la conduite 25. Après passage sur le catalyseur du réacteur, le mélange en sortie est à une température de 465° C. Via la conduite 26, il entre et cède une partie de sa chaleur dans l'échangeur de chaleur 2.3 puis, via la conduite 27, il entre et est refroidi dans le refroidisseur condenseur 3.3.

Le mélange diphasique issu du refroidisseur condenseur 3.3 à 35°C environ est amené au séparateur 4.3 via la conduite 28. L'eau condensée est évacuée du séparateur 4.3 par la conduite 29 alors que la phase gazeuse est disponible dans la conduite 30 pour alimenter une unité avale de purification de CO et de recyclage d'H₂ et de CO₂.

L'installation de la Figure 3 est optimisée dans la mesure où chacun des échangeurs de chaleur 2.1, 2.2 et 2.3 utilisé l'énergie calorifique dissipée lors du refroidissement des flux gazeux sortant des réacteurs 1.1, 1.2 et 1.3 pour le chauffage des flux gazeux récupérés en sortie des condenseurs 4.1, 4.2 et 4.3.

Les compositions des mélanges gazeux en différents points de l'installation sont reportés dans le tableau 3 ci-dessous, en pourcentages molaires.

**TABLEAU 3**

| Constituants du mélange | "6" | "10" | "18" | "26" | "30" |
|---|---|---|---|---|---|
| CO | | 10,71 | 18,81 | 24,96 | 26,22 |
| CO₂ | 33,33 | 22,62 | 18,40 | 14,99 | 15,74 |
| H₂ | 66,67 | 55,96 | 55,60 | 54,94 | 57,70 |
| H₂O | | 10,71 | 7,19 | 5,11 | 0,34 |

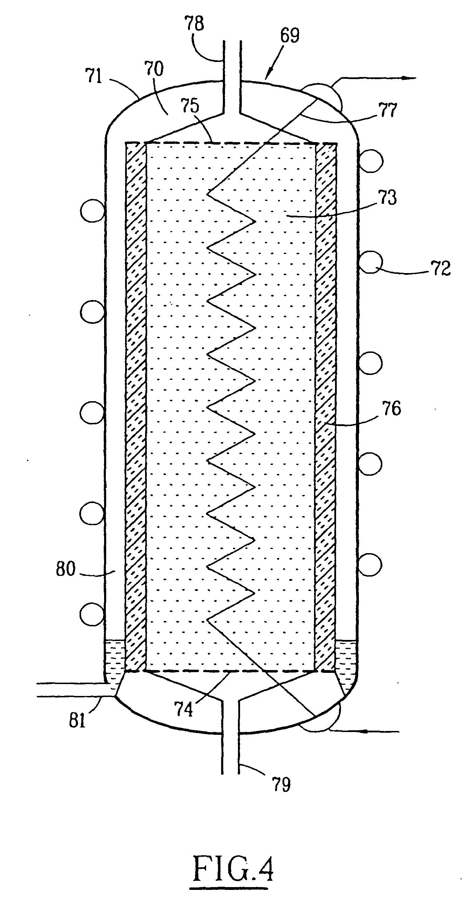

La Figure 4 est une vue en coupe schématique d'un réacteur 69 pour la mise en oeuvre d'un procédé selon l'invention, dans lequel les étapes consistant à traiter le mélange gazeux à une température de 300-520° C en présence du catalyseur ZnO-Cr₂O₃ et à éliminer l'eau formée, sont réalisées de façon concomitante.

Le réacteur 69 est constitué d'une enceinte close 70 à axe vertical, fermée par une enveloppe externe 71 équipée, tout le long de l'enceinte, d'un moyen de refroidissement 72 dans lequel circule un liquide de refroidissement. A l'intérieur de l'enceinte close 70 est disposé un lit catalytique 73 garni d'un catalyseur à base de ZnO et de Cr₂O₃ et ne comprenant pas de fer. Le lit catalytique 73, de forme cylindrique, est disposé au sein du réacteur 69, le long de son axe vertical, et est isolé du reste de l'enceinte par des grilles 74 et 75 en ses parties supérieure et inférieure et par une couche de matériau thermoisolant 76, perméable à la vapeur d'eau, sur toute sa surface latérale.

Un échangeur de chaleur 77 positionné le long de l'axe du réacteur, au sein du lit catalytique, dans lequel circule un fluide caloporteur, fournit la chaleur nécessaire pour compenser les pertes thermiques vers l'enceinte 71 et la chaleur nécessaire à la réaction endothermique.

Ledit échangeur de chaleur 77, disposé le long de l'axe vertical du réacteur 69 et dans lequel circule un liquide de chauffage, traverse de part en part le lit catalytique 73. Plus précisément, le serpentin de chauffage 77 traverse l'extrémité supérieure de la double enveloppe 71, puis la grille 75, et débouche dans le lit catalytique 73 qu'il traverse. Le serpentin de chauffage 77 traverse la grille 74 à l'extrémité inférieure du lit catalytique, puis l'extrémité inférieure de la double enveloppe 71.

Le réacteur 69 comprend en outre une conduite d'alimentation 78 en charge gazeuse, laquelle traverse l'extrémité supérieure de la double enveloppe 71, le long de l'axe central du lit catalytique. Les parois latérales de la conduite 78 s'évasent en forme de cône au-dessus de la grille 75 de façon à distribuer la charge gazeuse sur la totalité de la section du lit catalytique. De même, le réacteur comprend une conduite d'évacuation 79 du mélange gazeux prenant naissance juste au-dessous de la grille 74, située à l'extrémité inférieure du lit catalytique, traversant la double enveloppe 71 à son extrémité inférieure et dont la forme est exactement symétrique à celle de la conduite 78.

Le matériau isolant 76 et la double enveloppe 71 délimitent une enceinte annulaire 80 destinée à la récupération de l'eau formée. A l'extrémité inférieure de l'enceinte annulaire 80, une conduite 81 d'évacuation de l'eau traverse la double enveloppe 71.

En cours de production, le réacteur 69 est alimenté en continu en mélange gazeux à base d'hydrogène et d'anhydride carbonique par la conduite 78. Le mélange gazeux circule à travers le lit catalytique 73 où il est amené à réagir, le lit catalytique étant maintenu en permanence à une température de 300-520° C au moyen de l'échangeur de chaleur 77, et sous une pression de 10 à 40 bars.

La vapeur d'eau formée près de la surface latérale du lit catalytique traverse le matériau isolant 76 et vient se condenser à la surface interne de la double enveloppe 71. Un gradient de pression partielle de vapeur d'eau apparaît dans la direction radiale perpendiculaire à l'axe vertical du lit catalytique. Sous l'effet de ce gradient de pression partielle, la vapeur d'eau formée au sein du lit catalytique migre jusqu'à l'enceinte annulaire 80 où elle est condensée. L'eau formée est ainsi évacuée au fur et à mesure de sa formation.

Ainsi, le gaz récupéré par la conduite 79 est pratiquement débarassé de la vapeur d'eau formée pendant la réaction.

Pour la mise en oeuvre de ce mode de réalisation particulier, l'homme du métier pourra développer un matériau thermoisolant spécifique, perméable à la vapeur d'eau, ou utiliser les matériaux appropriés disponibles dans la technique.

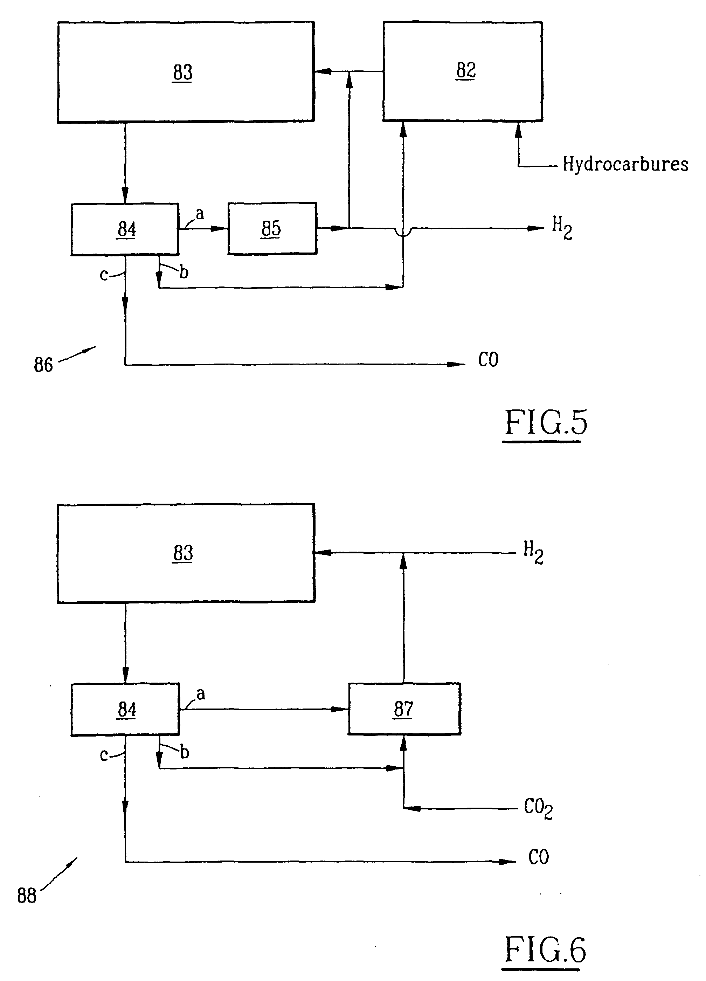

La figure 5 décrit le schéma fonctionnel d'une unité de production de monoxyde de carbone et éventuellement d'H₂ incluant un module 82 générant un mélange d'H₂, de CO et de CO₂, un module 83 utilisant le procédé de l'invention pour augmenter la quantité de CO produite, un module 84 utilisant un procédé PSA pour séparer un flux a) riche en H₂, un flux b) riche en CO₂ et un flux c) riche en CO.

Plus précisément, le module 82 est un dispositif pour le réformage à la vapeur, à l'oxygène ou au CO₂, d'hydrocarbures, et le module 83 est mis en oeuvre à une pression comprise entre 10 et 40 bars.

Le flux riche en H₂ est recyclé partiellement grâce au compresseur 85 vers le module 83, l'excédent étant exporté en limite d'unité 86. Une variante consiste à exporter tout l'hydrogène issu du module 84.

Le flux riche en CO₂, contenant également de l'H₂ et du CO, est utilisé comme gaz de chauffe dans l'unité 82. Une variante consiste à l'utiliser comme gaz de chauffe dans l'unité 83.

Le flux riche en CO est exporté en limite d'unité 86.

La figure 6 décrit une unité 88 incluant un module de production de CO 83, un module PSA 84 et un compresseur de CO₂ 87.

Cette unité 88 est très semblable à la précédente mais elle est installée sur un site où du CO₂ est disponible en basse pression, par exemple près d'une unité de synthèse d'ammoniac, et elle est alimentée en H₂ par une unité indépendante, en particulier via un pipeline.

L'unité 83 est alimentée en H₂ directement à partir du pipeline et en CO₂ via le compresseur 87.

Les flux a) et b) sont recyclés à l'entrée du module 83 via le compresseur 87 en utilisant au mieux les étages de compression disponibles.

Une variante consiste à utiliser tout ou partie du flux b) comme gaz de chauffe du module 83.

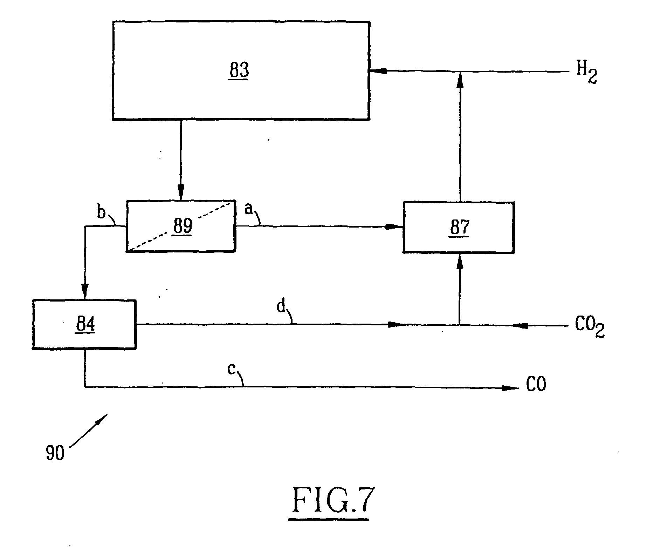

Le schéma fonctionnel de la figure 7 illustre une unité de production 90 comprenant un module de production CO 83, un module de perméation par membranes sélectives 89, un module PSA 84 et un compresseur de CO₂ 87.

Le mélange gazeux issu du module 83 est d'abord traité dans le module 89 comprenant des membranes sélectives pour récupérer la majeure partie de l'H₂ dans le perméat b). Le résiduaire de la membrane est alors traité dans le PSA 84 avec production d'un flux c) riche en CO.

Le flux a) issu du module 89 et le flux d) riche en CO₂ issu du module 84 sont recyclés via le compresseur 87 avec le CO₂ alimentant l'unité.

Une variante consiste à utiliser tout ou partie du flux d) comme gaz de chauffe du module 83.

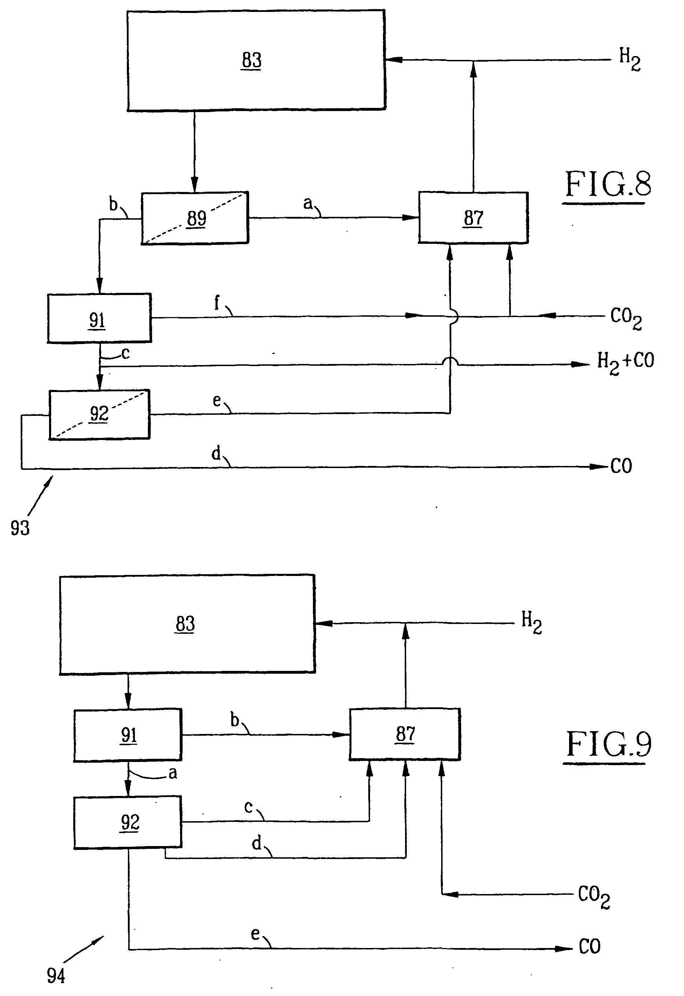

Le schéma fonctionnel de la figure 8 décrit une unité de production 93 de CO et de mélange H₂/CO comprenant le module de production CO 83, un module de perméation 89, un compresseur 87, un module d'absorption du CO₂ en phase liquide 91, un module de séchage et de séparation cryogénique 92. Comme pour le schéma précédent, une partie de l'hydrogène issu du module 83 est séparé par perméation sélective dans le module 89. Le résiduaire du module membranes b) est ensuite traité dans le module 91 où le CO₂ est éliminé par absorption en phase liquide. Le gaz décarbonaté c) est alors un mélange comprenant essentiellement de l'H₂ et du CO, avec un ratio H₂/CO déterminé pour les besoins de l'industrie et contrôlé par le module 89. Une partie (ou la totalité) de ce mélange constitue alors une production de l'unité 93. l'autre partie est traitée dans le module 92 pour produire une fraction d) riche en CO.

Le perméat issu du module 89, le flux f) riche en CO₂ issu du module 91, après régénération du solvant, le résiduaire riche en CO et H₂ e) issu du module 92 sont recyclés vers le module 83 via le compresseur 87 avec le CO₂ d'alimentation.

Une variante consiste à utiliser tout ou partie du flux e) comme gaz de chauffe du module 83.

La figure 9 illustre le schéma fonctionnel d'une unité de production de CO 94 comprenant un module de production 83, un module 91 d'absorption de CO₂ en phase liquide, un module 92 de séchage et de séparation cryogénique. Tout le mélange issu du module 83 est traité dans le module 91 et le gaz décarbonaté a) est traité dans le module 92 qui produit une fraction riche en CO e) délivrable en limite d'unité.

Le gaz riche en CO₂ issu du module 91, le gaz riche en H₂ c) et le gaz résiduaire riche en H₂ et CO d) issu du module 92 sont recyclés vers le module 83 via le compresseur 87 avec le CO₂ d'alimentation.

En variante, tout ou partie du flux d) peut être utilisé comme gaz de chauffe de l'unité 83.

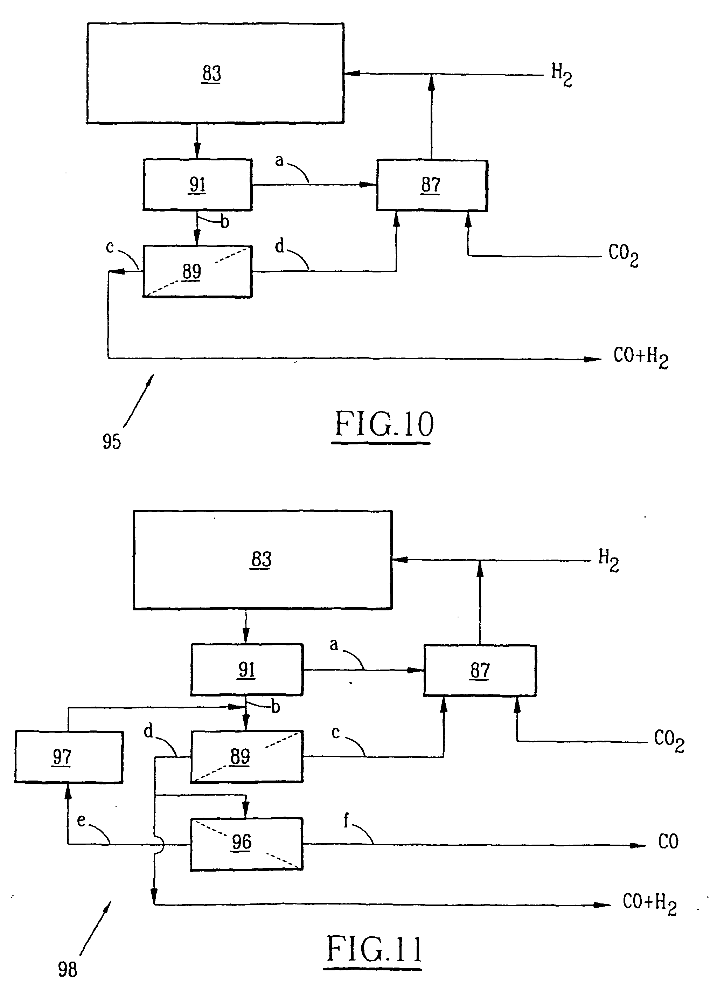

La figure 10 illustre le schéma fonctionnel d'une unité de production 95 d'un mélange H₂ et CO comprenant le module 83 de production CO, le module 91 d'absorption du CO₂ en phase liquide, le compresseur 87 et le module de perméation 89.

Le mélange issu du module 83 est traité dans le module 91 et le gaz décarbonaté b) est traité dans le module 89 qui produit un mélange comprenant essentiellement de l'H₂ et du CO avec un ratio spécifié par l'industrie.

Le flux a) riche en CO₂ issu du module 91 et le flux d) riche en H₂ issu du module 89 sont recyclés vers le module 83 via le compresseur 87 de CO₂ d'alimentation.

La figure 11 décrit une unité 98 de production de CO et d'un mélange H₂ et CO, comprenant un module 83 de production CO, un module 91 d'absorption en phase liquide de CO₂, un compresseur 87, deux modules de perméation 89 et 96 et un compresseur 97.

Comme dans le schéma précédent, les modules 83, 91, 89 et 87 permettent de produire un mélange H₂ et CO avec un ratio H₂/CO correspondant aux besoins de l'industrie mais en plus, une partie de ce mélange est traité dans le module supplémentaire de perméation 96 pour produire une fraction riche en CO f). Le perméat de cette membrane e) est un mélange d'H₂ et de CO qui est recyclé à l'entrée du module 89 par le compresseur 97.

L'exemple suivant illustre plus avant l'invention.

### EXEMPLE DE REALISATION

Un essai a été effectué pendant 1200 heures environ avec un catalyseur contenant :

| | |
|---|---|
| ZnO | 77,5 % en poids |
| Cr₂O₃ | 21,3 % en poids |
| NiO | 1,2 % en poids. |

Le lit catalytique a été alimenté avec un mélange gazeux dont la composition était la suivante :

| | |
|---|---|
| H₂ | 74,2 % en volume |
| CO₂ | 24,7% en volume |
| CO | 1,0 % en volume |
| H₂O | 0,1% en volume. |

La réaction catalytique a été menée sous 20 bars avec une température moyenne de 430° C.

La composition du gaz en sortie du réacteur était la suivante :

| | |
|---|---|
| H₂ | 71,3% en volume |
| CO₂ | 15,8% en volume |
| CO | 12,1% en volume |
| CH₄ | 0,8% en volume. |

Le taux de conversion du CO₂ était alors de 40%.

## Revendications

1. Procédé pour la production de monoxyde de carbone par rétroconversion inverse, en phase gazeuse, d'anhydride carbonique gazeux et d'hydrogène gazeux avec minimisation de la production de méthane, **caractérisé en ce que** la réaction est réalisée à une température de 300 à 520° C et sous une pression de 10 à 40 bars en présence d'un catalyseur à base d'oxyde de zinc et d'oxyde de chrome, ne contenant pas de fer.

2. Procédé selon la revendication 1, **caractérisé en ce que** ledit catalyseur ne comprend pas plus de 2,5% en poids de nickel.

3. Procédé selon l'une quelconque des revendications précédentes, **caractérisé en ce que** le rapport pondéral de l'oxyde de zinc à l'oxyde de chrome est compris entre 1, 5 et 4,5, de préférence entre 1,5 et 2,5.

4. Procédé selon l'une quelconque des revendications précédentes, **caractérisé en ce qu'**il est réalisé en continu et **en ce qu'**il comprend l'étape consistant à faire passer un mélange gazeux riche en hydrogène et en dioxyde de carbone à une température de 300 à 520° C à travers un lit catalytique garni dudit catalyseur.

5. Procédé selon la revendications 4, **caractérisé en ce que** le rapport molaire de l'hydrogène à l'anhydride carbonique dans ledit mélange gazeux est compris entre 0,5 et 15.

6. Procédé selon l'une quelconque des revendications précédentes, **caractérisé en ce que** la réaction est réalisée sous une pression de 15 à 25 bars.

7. Procédé selon la revendication 4, **caractérisé en ce que** la vitesse volumétrique horaire du mélange gazeux entrant dans ledit lit catalytique est comprise entre 4000 et 6000 Nm³/h par m³ de catalyseur présent dans le lit catalytique.

8. Procédé selon l'une quelconque des revendications précédentes, **caractérisé en ce qu'**il comprend en outre l'étape consistant à séparer la vapeur d'eau contenue dans le mélange gazeux, produit de la réaction, par condensation.

9. Procédé selon l'une quelconque des revendications précédentes, **caractérisé en ce que** la vapeur d'eau formée est séparée du milieu réactionnel au fur et à mesure de sa formation.

10. Procédé selon l'une quelconque des revendications 1 à 7, **caractérisé en ce qu'**il est réalisé en continu et **en ce qu'**il comprend les étapes consistant à :
a) préparer un mélange gazeux riche en hydrogène et en dioxyde de carbone présentant une température comprise entre 300 et 520° C ;
b) faire réagir ledit mélange gazeux, avec formation de monoxyde de carbone et de vapeur d'eau, par passage dudit mélange gazeux à travers un lit catalytique garni d'un catalyseur à base d'oxyde de zinc et d'oxyde de chrome et maintenu sous une pression de 10 à 40 bars ;
c) refroidir le flux gazeux sortant dudit lit catalytique de façon à condenser la vapeur d'eau formée ;
d) séparer l'eau condensée dudit flux gazeux ; et
e) le cas échéant, retraiter au moins une fois le flux gazeux résultant, préalablement porté à une température de 300 à 520° C, par mise en oeuvre des étapes b) à d) précédentes, de façon à augmenter la proportion de monoxyde de carbone dans le flux gazeux.

11. Procédé selon la revendication 10, **caractérisé en ce qu'**à l'étape e), le flux gazeux est retraité de une à quatre fois.

12. Procédé selon l'une quelconque des revendications 10 et 11, **caractérisé en ce qu'**il comprend les étapes consistant à :
a) préparer un mélange gazeux riche en hydrogène et en dioxyde de carbone présentant une température comprise entre 300 et 520° C, ladite température étant atteinte par récupération de la chaleur cédée lors d'une étape ultérieure et par échange thermique avec une source extérieure de chaleur ;
b) faire réagir ledit mélange gazeux, avec formation de monoxyde de carbone et de vapeur d'eau, par passage dudit mélange gazeux à travers un lit catalytique garni d'un catalyseur à base d'oxyde de zinc et d'oxyde de chrome et maintenu sous une pression de 10 à 40 bars ;
c) refroidir le flux gazeux sortant dudit lit catalytique jusqu'à température ambiante par cession de chaleur avec l'étape a) et par échange thermique avec une source froide extérieure, de façon à condenser tout ou partie de la vapeur d'eau formée ;
d) séparer l'eau condensée dudit flux gazeux ; et
e) le cas échéant, retraiter au moins une fois le flux gazeux résultant, préalablement porté à une température de 300 à 520° C, par mise en oeuvre des étapes b) à d) précédentes, de façon à augmenter la proportion de monoxyde de carbone dans le flux gazeux, chaque étape b) étant préférablement réalisée dans un lit catalytique distinct.

13. Procédé selon l'une quelconque des revendications 4 à 12, **caractérisé en ce que** le lit catalytique est chauffé par une source calorifique externe de telle sorte que la température du flux gazeux sortant ne soit pas inférieure à la température du mélange gazeux entrant.

14. Procédé selon l'une quelconque des revendications 10 à 12, **caractérisé en ce qu'**avant séparation de la vapeur d'eau, on refait passer le flux gazeux sortant préalablement réchauffé à une température comprise entre 300 et 520° C dans un second lit catalytique garni dudit catalyseur.

15. Réacteur (69) pour la mise en oeuvre du procédé selon la revendication 9, constitué d'une enceinte close (70) à axe vertical, fermée par une enveloppe externe (71) et comprenant :
(i) une chambre réactionnelle cylindrique (73) garnie d'un catalyseur à base d'oxyde de zinc et d'oxyde de chrome et ne contenant pas de fer, disposée au sein dudit réacteur le long de son axe vertical et délimitée sur toute sa surface latérale par une couche (76) de matériau thermoisolant et perméable à la vapeur d'eau et à ses deux extrémités supérieure et inférieure par deux grilles (74, 75), un espace annulaire libre (80) étant ménagé entre l'enveloppe externe (71) et ladite couche (76) de matériau thermoisolant ;
(ii) un moyen de refroidissement (72) enroulé autour de l'enveloppe externe (71) du réacteur ;
(iii) un échangeur de chaleur (77) disposé le long de l'axe vertical du réacteur au sein de la chambre réactionnelle (73) et traversant le réacteur (69) de part en part ;
(iv) une conduite d'alimentation en charge gazeuse (78) ;
(v) une conduite d'évacuation du flux gazeux sortant (79) ; et
(vi) une conduite d'évacuation de l'eau (81).

16. Procédé selon l'une quelconque des revendications 1 à 14, **caractérisé en ce que** le mélange gazeux, produit de la réaction, qui comprend du monoxyde de carbone, de l'anhydride carbonique et de l'hydrogène, est traité de façon à isoler le monoxyde de carbone ou un mélange de monoxyde de carbone et d'hydrogène.

## Patentansprüche

1. Verfahren zur Herstellung von Kohlenmonoxid durch Gasphasenretrokonvertierung von gasförmigem Kohlendioxid und gasförmigem Wasserstoff mit Minimierung der Bildung von Methan, **dadurch gekennzeichnet, daß** man die Reaktion bei einer Temperatur von 300 bis 520°C unter einem Druck von 10 bis 40 bar in Gegenwart eines eisenfreien Katalysators auf Basis von Zinkoxid und Chromoxid durchführt.

2. Verfahren nach Anspruch 1, **dadurch gekennzeichnet, daß** der Katalysator höchstens 2,5 Gew.-% Nickel enthält.

3. Verfahren nach einem der vorhergehenden Ansprüche, **dadurch gekennzeichnet, daß** das Gewichtsverhältnis von Zinkoxid zu Chromoxid zwischen 1,5 und 4,5 und vorzugsweise zwischen 1,5 und 2,5 liegt.

4. Verfahren nach einem der vorhergehenden Ansprüche, **dadurch gekennzeichnet, daß** man es kontinuierlich betreibt und ein wasserstoff- und kohlendioxidreiches Gasgemisch bei einer Temperatur von 300 bis 520°C durch eine mit dem Katalysator gefüllte Katalysatorschüttung leitet.

5. Verfahren nach Anspruch 4, **dadurch gekennzeichnet, daß** das Molverhältnis von Wasserstoff zu Kohlendioxid in dem Gasgemisch zwischen 0,5 und 15 liegt.

6. Verfahren nach einem der vorhergehenden Ansprüche, **dadurch gekennzeichnet, daß** man die Reaktion unter einem Druck von 15 bis 25 bar durchführt.

7. Verfahren nach Anspruch 4, **dadurch gekennzeichnet, daß** die Katalysatorbelastung mit dem in die Katalysatorschüttung eintretenden Gas zwischen 4000 und 6000 Nm³/h pro m³ Katalysator in der Katalysatorschüttung liegt.

8. Verfahren nach einem der vorhergehenden Ansprüche, **dadurch gekennzeichnet, daß** man ferner den bei der Reaktion entstandenen Wasserdampf, der in dem Gasgemisch enthalten ist, durch Kondensation abtrennt.

9. Verfahren nach einem der vorhergehenden Ansprüche, **dadurch gekennzeichnet, daß** man den gebildeten Wasserdampf so schnell aus dem Reaktionsgemisch abtrennt, wie er sich bildet.

10. Verfahren nach einem der Ansprüche 1 bis 7, **dadurch gekennzeichnet, daß** man es kontinuierlich betreibt und:
a) ein wasserstoff- und kohlendioxidreiches Gasgemisch mit einer Temperatur zwischen 300 und 520°C herstellt;
b) das Gasgemisch unter Bildung von Kohlenmonoxid und Wasserdampf zur Reaktion bringt, indem man das Gasgemisch durch eine mit einem Katalysator auf Basis von Zinkoxid und Chromoxid gefüllte und unter einem Druck von 10 bis 40 bar gehaltene Katalysatorschüttung leitet;
c) das aus der Katalysatorschüttung austretende Gasgemisch abkühlt, damit der gebildete Wasserdampf kondensiert;
d) das kondensierte Wasser aus dem Gasstrom abtrennt und
e) gegebenenfalls den erhaltenen Gasstrom nach Vorerhitzen auf eine Temperatur von 300 bis 520°C mindestens einmal nachbehandelt, indem man die obigen Schritte b) bis d) durchführt, damit der Kohlenmonoxidanteil in dem Gasstrom zunimmt.

11. Verfahren nach Anspruch 10, **dadurch gekennzeichnet, daß** man in Schritt e) den Gasstrom einbis viermal nachbehandelt.

12. Verfahren nach Anspruch 11 oder 12, **dadurch gekennzeichnet, daß** man:
a) ein wasserstoff- und kohlendioxidreiches Gasgemisch mit einer Temperatur zwischen 300 und 520°C herstellt, wobei die Temperatur durch Rückgewinnung der bei einem nachfolgenden Schritt abgegebenen Wärme und durch Wärmeaustausch mit einer externen Wärmequelle erreicht wird;
b) das Gasgemisch unter Bildung von Kohlenmonoxid und Wasserdampf zur Reaktion bringt, indem man das Gasgemisch durch eine mit einem Katalysator auf Basis von Zinkoxid und Chromoxid gefüllte und unter einem Druck von 10 bis 40 bar gehaltene Katalysatorschüttung leitet;
c) das aus der Katalysatorschüttung austretende Gasgemisch durch Abgabe der Wärme in Schritt a) und durch Wärmeaustausch mit einer externen Kältequelle auf Umgebungstemperatur abkühlt, damit der gebildete Wasserdampf ganz oder teilweise kondensiert;
d) das kondensierte Wasser aus dem Gasstrom abtrennt und
e) gegebenenfalls den erhaltenen Gasstrom nach Vorerhitzen auf eine Temperatur von 300 bis 520°C mindestens einmal nachbehandelt, indem man die obigen Schritte b) bis d) durchführt, damit der Kohlenmonoxidanteil in dem Gasstrom zunimmt, wobei jeder Schritt b) vorzugsweise in einer anderen Katalysatorschüttung durchgeführt wird.

13. Verfahren nach einem der Ansprüche 4 bis 12, **dadurch gekennzeichnet, daß** man die Katalysatorschüttung mit einer externen Wärmequelle so erhitzt, daß die Temperatur des austretenden Gasstroms nicht unter der Temperatur des eintretenden Gasgemischs liegt.

14. Verfahren nach einem der Ansprüche 10 bis 12, **dadurch gekennzeichnet, daß** man vor der Abtrennung des Wasserdampfs den austretenden Gasstrom nach Vorerhitzen auf eine Temperatur von 300 bis 520°C durch eine zweite mit dem Katalysator gefüllte Katalysatorschüttung leitet.

15. Reaktor (69) zur Durchführung des Verfahrens gemäß Anspruch 9, bestehend aus einem geschlossenen Raum (70) mit vertikaler Achse, die durch eine Außenhülle (71) verschlossen ist und folgendes umfaßt:
(i) eine mit einem Katalysator auf Basis von Zinkoxid und Chromoxid gefüllte zylindrische Reaktionskammer (73), die in dem Reaktor entlang seiner vertikalen Achse angeordnet ist und über ihre gesamte Mantelfläche durch eine Schicht (76) aus wärmeisolierendem und wasserdampfdurchlässigem Material und an ihrem oberen und unteren Ende durch zwei Gitter (74, 75) begrenzt wird, wobei zwischen der Außenhülle (71) und der Schicht (76) aus wärmeisolierendem Material ein freier Ringraum (80) vorgesehen ist;
(ii) eine Kühleinrichtung (72), die um die Außenhülle (71) des Reaktors gewickelt ist;
(iii) einen Wärmetauscher (77), der entlang der vertikalen Achse des Reaktors in der Reaktionskammer (73) angeordnet ist und ganz durch den Reaktor (69) hindurchgeht;
(iv) eine Leitung zur Zufuhr von Gaseinsatzstoff (78):
(v) eine Leitung zum Abführen des austretenden Gasstroms (79) und
(vi) eine Leitung zum Abführen von Wasser (81).

16. Verfahren nach einem der Ansprüche 1 bis 14, **dadurch gekennzeichnet, daß** man das bei der Reaktion anfallende Gasgemisch, das Kohlenmonoxid, Kohlendioxid und Wasserstoff enthält, so behandelt, daß das Kohlenmonoxid oder ein Gemisch von Kohlenmonoxid und Wasserstoff isoliert wird.

## Claims

1. Process for the production of carbon monoxide by reverse conversion, in the gas phase, of gaseous carbon dioxide and gaseous hydrogen, while minimizing the production of methane, **characterized in that** the reaction is carried out at a temperature of 300 to 520°C and at a pressure of 10 to 40 bar in the presence of a catalyst based on zinc oxide and chromium oxide and not containing iron.

2. Process according to Claim 1, **characterized in that** said catalyst includes no more than 2.5% by weight of nickel.

3. Process according to either of the preceding claims, **characterized in that** the weight ratio of zinc oxide to chromium oxide is between 1.5 and 4.5, preferably between 1.5 and 2.5.

4. Process according to any one of the preceding claims, **characterized in that** it is carried out continuously and **in that** it comprises the step consisting in making a gas mixture rich in hydrogen and carbon dioxide pass at a temperature of 300 to 520°C through a catalyst bed furnished with said catalyst.

5. Process according to Claim 4, **characterized in that** the molar ratio of hydrogen to carbon dioxide in said gas mixture is between 0.5 and 15.

6. Process according to any one of the preceding claims, **characterized in that** the reaction is carried out at a pressure of 15 to 25 bar.

7. Process according to Claim 4, **characterized in that** the volumetric hourly space velocity of the gas mixture entering said catalyst bed is between 4000 and 6000 Sm³/h per m³ of catalyst present in the catalyst bed.

8. Process according to any one of the preceding claims, **characterized in that** it furthermore includes the step consisting in separating the steam contained in the gas mixture, produced during the reaction, by condensation.

9. Process according to any one of the preceding claims, **characterized in that** the steam formed is separated from the reaction mixture progressively as it is formed.

10. Process according to any one of Claims 1 to 7, **characterized in that** it is carried out continuously and **in that** it comprises the steps consisting in:,
a) preparing a gas mixture rich in hydrogen and in carbon dioxide, having a temperature of between 300 and 520°C;
b) making said gas mixture react, with formation of carbon monoxide and steam, by passing said gas mixture through a catalyst bed furnished with a catalyst based on zinc oxide and chromium oxide and maintained at a pressure of 10 to 40 bar;
c) cooling the gas stream leaving said catalyst bed so as to condense the steam formed;
d) separating the condensed water from said gas stream; and
e) if necessary, re-treating, at least once, the resulting gas stream raised beforehand to a temperature of 300 to 520°C, by implementing the preceding steps b) to d), so as to increase the proportion of carbon monoxide in the gas stream.

11. Process according to Claim 10, **characterized in that**, in step e), the gas stream is re-treated from one to four times.

12. Process according to either of Claims 10 and 11, **characterized in that** it comprises the steps consisting in:
a) preparing a gas mixture rich in hydrogen and in carbon dioxide, having a temperature of between 300 and 520°C, said temperature being reached by recovering the heat given off during a subsequent step and by heat exchange with an external heat source;
b) making said gas mixture react, with formation of carbon monoxide and steam, by passing said gas mixture through a catalyst bed furnished with a catalyst based on zinc oxide and chromium oxide and maintained at a pressure of 10 to 40 bar;
c) cooling the gas stream leaving said catalyst bed down to room temperature by delivering heat to step
a) and by heat exchange with an external cold source, so as to condense all or some of the steam formed;
d) separating the condensed water from said gas stream; and
e) if necessary, re-treating, at least once, the resulting gas stream raised beforehand to a temperature of 300 to 520°C, by implementing the preceding steps b) to d), so as to increase the proportion of carbon monoxide in the outgoing gas stream, each step b) being preferably carried out in a separate catalyst bed.

13. Process according to any one of Claims 4 to 12, **characterized in that** the catalyst bed is heated by an external heat source in such a way that the temperature of the outgoing gas stream is not less than the temperature of the incoming gas mixture.

14. Process according to any one of Claims 10 to 12, **characterized in that**, before the steam is separated, the outgoing gas stream, reheated beforehand to a temperature between 300 and 520°C, is made to pass again through a second catalyst bed furnished with said catalyst.

15. Reactor (69) for implementing the process according to Claim 9, consisting of a closed vessel (70) of vertical axis, closed by an external shell (71) and comprising:
(i) a cylindrical reaction chamber (73) furnished with a catalyst based on zinc oxide and chromium oxide and not containing iron, placed within said reactor along its vertical axis and bounded over its entire lateral surface by a layer (76) of thermally insulating steam-permeable material and at its two ends, top and bottom, by two grids (74, 75), a free annular space (80) being provided between the external shell (71) and said layer (76) of thermally insulating material;
(ii) a cooling means (72) wound around the external shell (71) of the reactor;
(iii) a heat exchanger (77) placed along the vertical axis of the reactor within the reaction chamber (73) and passing right through the reactor (69) ;
(iv) a gas feedstock pipe (78);
(v) a pipe (79) for discharging the outgoing gas stream; and
(vi) a water discharge pipe (81).

16. Process according to any one of Claims 1 to 14, **characterized in that** the gas mixture, the product of the reaction, which comprises carbon monoxide, carbon dioxide and hydrogen, is treated so as to isolate the carbon monoxide or a carbon monoxide/hydrogen mixture.
